# EUROPÄISCHE PATENTANMELDUNG

(11) **EP 3 520 954 A1**
(43) Veröffentlichungstag der Anmeldung: **07.08.2019**
(21) Anmeldenummer: 18020403.4
(22) Anmeldetag: 22.08.2018
(51) Int. Cl.: B23P 19/04, B60J 10/00, B25J 5/02, B25J 9/00, B62D 65/06

(54) **MONTAGESYSTEM ZUM MONTIEREN EINES DICHTUNGSPROFILS AN EINEM KAROSSERIEFLANSCH**

(30) Priorität: 31.01.2018 DE 102018102136
(71) Anmelder: Dr. Ing. h.c. F. Porsche AG, 70435 Stuttgart (DE)
(72) Erfinder: Tittelwitz, Sascha, 71282 Hemmingen (DE); Schmidberger, Thomas, 70191 Stuttgart (DE)

(57) **Zusammenfassung**

Montagesystem (10) zum Montieren eines Dichtungsprofils (20) an einem Karosserieflansch (30), mit einem Rollformwerkzeug (40), mit dem ein Dichtungsprofil (20) durch Rollformen an dem Karosserieflansch (30) befestigbar ist, wobei das Dichtungsprofil (20) eine Metallverstärkung (25) aufweist, welche zum Befestigen des Dichtungsprofils (20) an dem Karosserieflansch (30) durch das Rollformwerkzeug (40) verformbar ist, wobei ein Robotersystem (50) zum Bewegen des Rollformwerkzeugs (40) vorgesehen ist, wobei das Rollformwerkzeug (40) durch das Robotersystem (50) entlang des Dichtungsprofils (20) bewegbar ist.

## Beschreibung

Die Erfindung betrifft ein Montagesystem zum Montieren eines Dichtungsprofils an einem Karosserieflansch.

Bei einem Kraftfahrzeug müssen diverse Dichtungsprofile an Karosserieflanschen befestigt werden, wobei die Karosserieflansche beispielsweise an Fenster- und Türöffnungen sowie an Motorhauben- und Kofferraumöffnungen ausgebildet sind. Derartige Dichtungsprofile weisen üblicherweise einen u-förmigen Abschnitt auf, welcher durch ein in dem Dichtungsprofil eingebettetes, u-förmiges Metallblech verstärkt ist. Zum Montieren des Dichtungsprofils an dem Karosserieflansch wird das Dichtungsprofil im ersten Schritt mit dem u-förmigen Abschnitt auf den stegartige Karosserieflansch aufgesteckt. Im darauffolgenden, zweiten Schritt wird der u-förmige und durch das Metallblech verstärkte Abschnitt zusammengepresst. Durch das Zusammenpressen des u-förmigen Abschnitts werden die beiden Schenkel einander angenähert und das Dichtungsprofil wird fest an dem Karosserieflansch befestigt.

Der zweite Schritt erfolgt üblicherweise durch Rollformen, wobei hierfür Werkzeuge bekannt sind, die zwei drehbare Rollen aufweisen, die rechts und links an den beiden Schenkeln des Dichtungsprofils bzw. auf beiden Seiten des Karosserieflansches platziert werden. Zwischen den Rollen ist ein derartiger Abstand voreingestellt, dass durch das Abfahren des Dichtungsprofils der u-förmige, verstärkte Bereich derart verformt wird, dass ein über die Lebensdauer des Kraftfahrzeugs andauernder fester Sitz des Dichtungsprofils an dem Karosserieflansch gewährleistet wird. Ein derartiges Rollformwerkzeug ist beispielsweise aus der DE 10 2007 001 967 A1 bekannt, wobei das Rollformwerkzeug manuell durch einen Werkperson entlang des Dichtungsprofils geführt wird.

Nachteilig an einem manuell geführten Rollformwerkzeugs ist, dass durch das manuelle Führen des Rollformwerkzeugs der Montageprozess relativ lange dauert.

Die Aufgabe der Erfindung ist es daher, ein Montagesystem zum Montieren eines Dichtungsprofils bereitzustellen, mit dem die Montagezeit des Dichtungsprofils an dem Karosserieflansch reduziert wird.

Diese Aufgabe wird durch ein Montagesystem zum Montieren eines Dichtungsprofils mit den Merkmalen des unabhängigen Anspruchs 1 gelöst.

Das Montagesystem weist ein Rollformwerkzeug auf, mit dem ein Dichtungsprofil an einem um eine Tür-, Kofferraum- oder Motorhaubenöffnung umlaufenden Karosserieflansch befestigbar ist.

Das Dichtungsprofil ist aus einem elastischen Material hergestellt. Das Dichtungsprofil weist eine Dichtlippe und einem u-förmigen Befestigungsabschnitt auf. In dem u-förmigen Befestigungsbereich ist eine u-förmige Metallverstärkung eingebettet.

Zum Befestigen des Dichtungsprofils an dem Karosserieflansch wird das Dichtungsprofil im ersten Schritt mit dem u-förmigen Dichtungsbereich auf den Karosserieflansch aufgesteckt. Im zweiten Schritt wird das Rollformwerkzeug an dem Dichtungsprofil platziert und wird das Dichtungsprofil vollständig mit dem Rollformwerkzeug abgefahren, wodurch die beiden Schenkel des u-förmige Befestigungsabschnitts zusammengedrückt werden, wodurch das Dichtungsprofil an dem Karosserieflansch fest verbunden wird.

Erfindungsgemäß weist das Montagesystem zum Führen des Rollformwerkzeugs ein Robotersystem auf. Das Robotersystem weist ein Gestell auf, an dem eine um die Z-Achse drehbare Schwinge gelagert ist. Am freien Ende der Schwinge ist ein Ausleger drehbar gelagert, wobei der Ausleger um die Y-Achse schwenkbar ist. Am freien Ende des Auslegers ist eine Roboterhand angeordnet, wobei an der Roboterhand das Rollformwerkzeug befestigt ist. Die Roboterhand ist um die X-Achse rotierbar.

Durch eine derartige Ausgestaltung des Robotersystems kann das Rollformwerkzeug in X-, Y- und Z-Richtung bewegt werden sowie um die X-, Y- und Z-Achse rotiert werden, so dass das Rollformwerkzeug grundsätzlich entlang unterschiedlicher räumlicher Ausgestaltungen des Karosserieflansches bzw. des Dichtungsprofils geführt werden kann.

Durch das mit einem Robotersystem ausgestattete Montagesystem kann das Befestigen des Dichtungsprofils automatisiert erfolgen, wodurch die Montagezeit des Dichtungsprofils reduziert wird.

Vorzugsweise ist das Robotersystem kurvengesteuert und/oder kraftgesteuert ausgeführt. Bei einem kurvengesteuerten Robotersystem wird dem Robotersystem ein durch die Ausgestaltung des Karosserieflansches festgelegter Verfahrweg vorgegeben. Dadurch kann das Robotersystem einfach programmiert und gesteuert werden. Bei einem kraftgesteuerten Robotersystem weist das Robotersystem mehrere Kraftsensoren auf, über die sich das Robotersystem den Verfahrweg selbst ermittelt. Außerdem kann das Robotersystem auf Änderungen des Verfahrwegs reagieren. Bei einem kraft- und kurvengesteuerten Robotersystem wird im Robotersystem der Verfahrweg vorgegeben, wobei das Robotersystem den Verfahrweg über die Kraftsteuerung korrigieren kann. Dadurch können die Vorteile des kraftgesteuerten Robotersystems und des weggesteuerten Robotersystems genutzt werden. In einer bevorzugten Ausgestaltung ist ein Führungsarm vorgesehen, welcher dem Robotersystem zugeordnet ist. Der Führungsarm weist beispielsweise zwei stabförmige Komponenten auf. Die erste stabförmige Komponente ist mit einem Ende schwenkbar an einem starr angeordneten Träger gelagert und mit dem entgegengesetzten Ende schwenkbar mit der zweiten stabförmigen Komponente verbunden. An dem freien Ende der zweiten Komponente ist das Robotersystem befestigt. Durch das Anordnen des Robotersystems an dem Führungsarm kann das Robotersystem mit dem Rollformwerkzeug einfach in eine Montageposition bewegt werden.

In einer bevorzugten Ausgestaltung weist der Führungsarm eine Antriebsvorrichtung auf. Dadurch kann der Führungsarm automatisiert bewegt werden und das Robotersystem mit dem Rollformwerkzeug automatisiert in die Montageposition bewegt werden.

Vorzugsweise sind das Rollformwerkzeug, das Robotersystem und der Führungsarm vollautomatisiert ausgeführt, wobei das Robotersystem mit dem Rollformwerkzeug automatisiert in die Montageposition bewegt wird und nachfolgend das Rollformwerkzeug automatisiert durch das Robotersystem entlang des auf den Karosserieflansch aufgesteckte Dichtungsprofils bewegt wird. Auf diese Weise kann die Montagezeit verkürzt werden und die Montagequalität verbessert werden.

In einer bevorzugten Ausgestaltung weist das Rollformwerkzeug mindestens zwei drehbare Rollen auf. Eine erste Rolle ist mit einer Antriebsvorrichtung verbunden und die zweite Rolle ist als eine Mitnehmerrolle ausgeführt. Die beiden Rollen werden rechts und links des Dichtungsprofils bzw. des Karosserieflansches platziert, wobei zwischen den Rollen ein vordefinierter Abstand voreingestellt ist. Durch das Abfahren des Dichtungsprofils werden die beiden Schenkel des u-förmigen und verstärkten Befestigungsabschnitts derart zusammengedrückt, dass ein über die Lebensdauer des Kraftfahrzeugs andauernder fester Sitz des Dichtungsprofils gewährleistet wird. Zum Bewegen des Rollformwerkzeugs entlang des Dichtungsprofils kann die erste Rolle durch die Antriebsvorrichtung angetrieben werden, wobei die zweite Rolle lediglich am Dichtungsprofil passiv abrollt.

Ein Ausführungsbeispiel der Erfindung wird anhand der Zeichnungen näher erläutert.
Figur 1 zeigt schematisch einen Querschnitt eines Dichtungsprofils,
Figur 2 zeigt schematisch ein Rollformwerkzeug in perspektivischer Ansicht, und
Figur 3 zeigt schematisch ein Montagesystem in perspektivischer Ansicht.

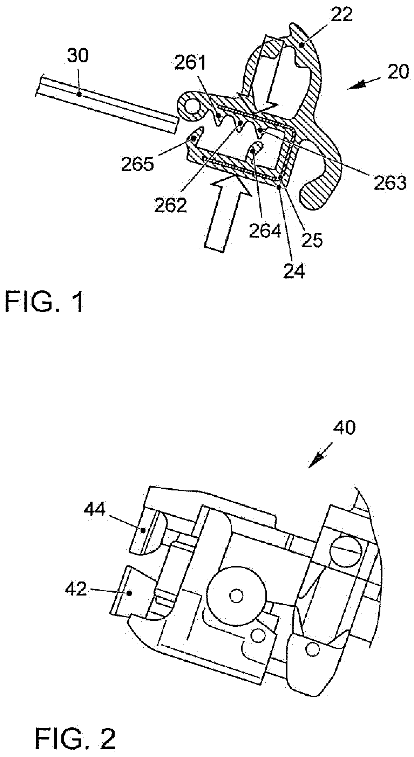

Figur 1 zeigt ein Dichtungsprofil 20, welches aus einem elastischen Material hergestellt ist. Das Dichtungsprofil 20 weist eine Dichtlippe 22 und einen Befestigungsbereich 24 auf. Der Befestigungsbereich 24 ist im Querschnitt u-förmig ausgestaltet und weist eine eingebettete u-förmige Metallverstärkung 25 auf. Im Inneren des u-förmigen Befestigungsbereichs 24 sind Vorsprünge 261, 262, 263, 264, 265 vorgesehen.

Beim Montieren des Dichtungsprofils 20 an einem im Querschnitt stegartigen Karosserieflansch 30 wird der aufgeweitete u-förmige Befestigungsbereich 24 auf den Karosserieflansch 30 aufgesteckt und durch ein Rollformwerkzeug 40, welches in Figur 2 gezeigt ist, derart verformt, dass das Dichtungsprofil 20 an dem Karosserieflansch 30 fest verbunden ist. Dabei erzeugt die Metallverstärkung 25 im verformten Zustand eine Presskraft auf die Vorsprünge 261, 262, 263, 264, 265, wodurch das Dichtungsprofil 20 kraftschlüssig an dem Karosserieflansch 30 befestigt wird.

Die Figur 2 zeigt das Rollformwerkzeug 40. Das Rollformwerkzeug 40 weist eine erste Rolle 42 und eine zweite Rolle 44 auf. Im Betrieb des Rollformwerkzeugs 40 werden die beiden Rollen 42, 44auf den beiden Schenkeln des Dichtungsprofils 20 platziert. Durch das Abfahren des Dichtungsprofils 20 werden die beiden Schenkel des u-förmigen, verstärkten Befestigungsbereichs derart zusammengedrückt, dass ein über die Lebensdauer des Kraftfahrzeugs andauernder fester Sitz des Dichtungsprofils 20 an dem Karosserieflansch 30 gewährleistet wird.

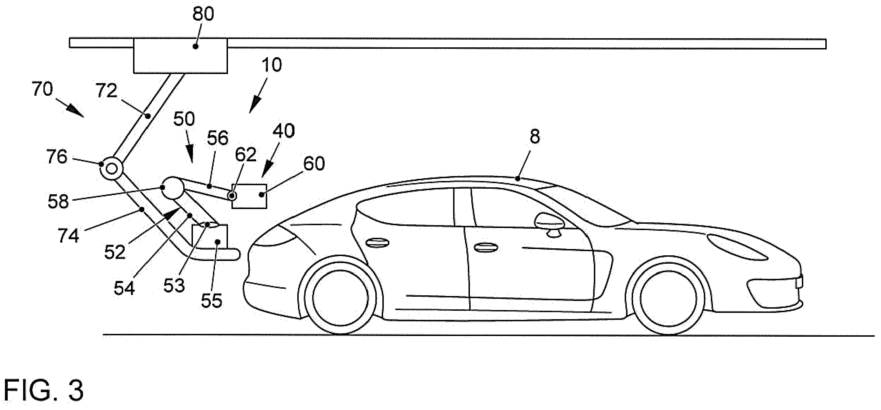

Figur 3 zeigt ein Montagesystem 10. Zur Verkürzung der Montagezeit weist das Montagesystem 10 erfindungsgemäß ein Robotersystem 50 auf. Das Robotersystem 50 ist an einem Führungsarm 70 befestigt.

Der Führungsarm 70 weist eine erste stabförmige Komponente 72 auf, welche mit einem axialen Ende an einem translatorisch bewegbaren Träger 80 befestigt ist. An dem entgegengesetzten axialen Ende der ersten Komponente 72 ist ein Drehgelenk 76 angeordnet, durch welches eine zweite Komponente 74 an der ersten Komponente 72 schwenkbar gelagert ist. An dem freien Ende der zweiten Komponente 74 ist das Robotersystem 50 befestigt.

Der Führungsarm 70 dient dazu, das Robotersystem 50 und das durch das Robotersystem 50 geführte Rollformwerkzeug 40 in eine Montagestellung zu bewegen. Dabei kann der Führungsarm 70 entweder von einer Werkperson manuell oder automatiesiert durch eine in den Figuren nicht gezeigte Antriebsvorrichtung betätigt werden.

Das an dem Führungsarm 70 befestigte Robotersystem 50 weist ein Gestell 55 auf, welches an dem Führungsarm 70 befestigt ist. An dem Gestell 55 ist eine Schwinge 54 über ein Schwingen-Lagerelement 53 drehbar gelagert, wobei die Schwinge 54 um die Z-Achse schwenkbar ist. Am freien Ende der Schwinge 54 ist ein Ausleger 56 über ein Ausleger-Lagerelement 58 drehbar gelagert, wobei der Ausleger 56 um die Y-Achse geschwenkt werden kann. Am freien Ende des Auslegers 56 ist eine Roboterhand 60 angeordnet, welche das Rollformwerkzeug 40 aufnimmt. Die Roboterhand 60 ist über ein Roboterhand-Lagerelement 62 drehbar gelagert, wodurch die Roboterhand 60 um die X-Achse rotiert werden kann.

Der Führungsarm 70, das Robotersystem 50 sowie das Rollformwerkzeug 40 weisen jeweils eine Antriebsvorrichtung auf. Dadurch erfolgt der Montagevorgang voll-automatisiert, wobei das Rollformwerkzeug 40 durch den Führungsarm 70 sowie über das Robotersystem 50 in eine Montagestellung bewegt wird. Anschließend wird das Rollformwerkzeug 40 durch das Robotersystem 50 entlang des Dichtungsprofils 20 bewegt, wodurch das Dichtungsprofil 20 an dem Karosserieflansch 30 fixiert wird.

Es sind auch andere konstruktive Ausführungsformen als die beschriebenen Ausführungsformen möglich, die in den Schutzbereich des Hauptanspruchs fallen.

## Patentansprüche

1. Montagesystem (10) zum Montieren eines Dichtungsprofils (20) an einem Karosserieflansch (30), mit
einem Rollformwerkzeug (40), mit dem ein Dichtungsprofil (20) durch Rollformen an dem Karosserieflansch (30) befestigbar ist, wobei das Dichtungsprofil (20) eine Metallverstärkung (25) aufweist, welche zum Befestigen des Dichtungsprofils (20) an dem Karosserieflansch (30) durch das Rollformwerkzeug (40) verformbar ist, **dadurch gekennzeichnet, dass**
ein Robotersystem (50) zum Bewegen des Rollformwerkzeugs (40) vorgesehen ist, wobei das Rollformwerkzeug (40) durch das Robotersystem (50) entlang des Dichtungsprofils (20) bewegbar ist.

2. Montagesystem (10) nach Anspruch 1,
**dadurch gekennzeichnet, dass**
das Robotersystem (50) kurvengesteuert und/oder kraftgesteuert ausgeführt ist.

3. Montagesystem (10) nach einem der vorhergehenden Ansprüche,
**dadurch gekennzeichnet, dass**
ein Führungsarm (70) vorgesehen ist, der dem Robotersystem (50) zugeordnet ist.

4. Montagesystem (10) nach einem der vorhergehenden Ansprüche,
**dadurch gekennzeichnet, dass**
der Führungsarm (70) eine Antriebsvorrichtung aufweist.

5. Montagesystem (10) nach Anspruch 4,
**dadurch gekennzeichnet, dass**
das Rollformwerkzeug (40), das Robotersystem (50) und der Führungsarm (70) vollautomatisiert ausgeführt sind.

6. Montagesystem (10) nach einem der vorhergehenden Ansprüche,
**dadurch gekennzeichnet, dass**
das Rollformwerkzeug (40) mindestens zwei drehbare Rollen (42, 44) aufweist, wobei eine erste Rolle (42) mit einer Antriebsvorrichtung verbunden ist und die zweite Rolle (44) als Mitnehmerrolle ausgeführt ist.
